# EUROPÄISCHE PATENTSCHRIFT

(11) **EP 2 407 020 B1**
(45) Veröffentlichungstag und Bekanntmachung des Hinweises auf die Patenterteilung: **29.10.2014**
(21) Anmeldenummer: 11172191.6
(22) Anmeldetag: 30.06.2011
(51) Int. Cl.: A01D 34/13, A01D 34/40

(54) **Schneidwerk für eine Erntemaschine**
Cutting assembly for an agricultural harvester
Barre de coupe pour une moissonneuse

(30) Priorität: 12.07.2010 DE 202010008039 U
(43) Veröffentlichungstag der Anmeldung: 18.01.2012
(73) Patentinhaber: Martin Ziegler GmbH & Co. KG, 86554 Pöttmes (DE)
(72) Erfinder: Coenen, Karl, 53721 Siegburg (DE); Bauer, Daniel, 53804 Much (DE); Elsen, Manfred, 45608 Bleialf (DE); Daferner, Gerhard, 86554 Pöttmes (DE); Frinzl, Richard, 86529 Schrobenhausen (DE)
(74) Vertreter: Charrier, Rapp & Liebau

(56) Entgegenhaltungen:
- BE-A- 464 674
- FR-A1- 2 591 421
- NL-A- 7 311 462
- US-A- 2 637 158
- US-A- 4 008 556

## Beschreibung

Die Erfindung betrifft ein Schneidwerk für eine Erntemaschine nach dem Oberbegriff des Anspruchs 1.

Aus der DE 196 51 098 A1 ist ein Rapstrennschneidwerk bekannt, bei dem ein Trennerhalter vorgesehen ist, an dem zwei mit Messern versehene Messerführungen relativ zueinander beweglich geführt sind. Der Trennerhalter weist mehrere Führungshalter zum Führen der Messerführungen auf, wobei der Trennerhalter einstückig ausgebildet ist und ein Oberteil und ein Unterteil aufweist. Mit dem Ober- und dem Unterteil sind jeweils vier Führungshalter einstückig verbunden, wobei die Messerführungen zwischen zwei gegenüberliegenden Führungshaltern verlaufen. Zwischen Führungshalter und Messerführung sind jeweils Führungen aus Kunststoff vorgesehen, in welcher die Messerführungen gleiten. Um die Kunststoffführungen mit den Führungshaltern zu verspannen, sind in gegenüberliegenden Führungshaltern Bohrungen im Ober- und Unterteil vorgesehen, durch welche Schraubbolzen mit einer Mutter verschraubt werden. Hierdurch wird der Trennerhalter sehr robust und steif. Der Trennerhalter selbst wird durch im Ober- und Unterteil einseitig vorgesehene Bohrungen über Bolzen an einer Erntemaschine befestigt. Eine entsprechende Befestigung geht aus der DE 31 19 938 A1 oder DE 33 25 194 A1 hervor.

Die DE 25 52 626 A1 offenbart einen Mähbalken mit einer Hohlschiene, die einen länglichen Kanal ausbildet und einen leistenförmigen Fortsatz und daran angeordnete Gegenmesser aufweist. Die zugehörigen Schermesser sind an einem Schwingarm angeordnet, welcher sich von einer Antriebswelle kommend durch eine Ausnehmung der Hohlschiene erstreckt. In dem länglichen Kanal ist die Antriebswelle mit dem daran angebrachtem Schwingarm für die beweglichen Schermesser angeordnet.

Die NL 7 311 462 A offenbart ein gattungsgemäßes Schneidwerk mit einem länglichen Messerrücken mit einem in dessen Längsrichtung durch einen Hydromotor antreibbaren Schneidmesser. Der Hydromotor wird mit druckbeaufschlagter Hydraulikflüssigkeit über Versorgungsleitungen gespeist, welche in einem durch Gestellplatten gebildeten rohrförmigen Kabelkanal verlaufen. Da der Kabelkanal schlecht zugänglich ist, sind die Montage, die Kontrolle der Versorgungsleitungen und der Austausch aufwendig und zeitraubend.

Die US 4 008 556 A offenbart eine Erntemaschine mit einem Schneidwerk mit einem daran angeordneten Schneidmesser, wobei das Schneidwerk über ein Stützelement und eine Befestigungsstruktur an der Erntemaschine befestigt ist. Das Schneidmesser wird vom Antriebsmotor der Erntemaschine über einen Riemenantrieb oszillierend angetrieben, so dass dort keine Versorgungsleitungen entlang des Messerrückens geführt werden müssen.

Die FR 2 591 421 A1 betrifft ein Schneidwerk mit einem länglichen Messerrücken und einem in dessen Längsrichtung oszillierend bewegbaren Schneidmesser. Das Schneidmesser wird angetrieben durch zwei gegensätzlich arbeitende einfachwirkende Hydraulikzylinder, welche durch jeweils eigene Versorgungsleitungen versorgt werden. Die Versorgungsleitungen werden hierzu über eine in Längsrichtung des Messerrückens verlaufendes, geschlossenes Rohr geführt, in dem jeweils im Bereich des entsprechenden Hydraulikzylinders eine Bohrung für die Versorgungsleitung vorgesehen ist. Die Versorgungsleitungen müssen somit bei der Montage umständlich durch die Bohrungen geführt und dann mit einem an den Innendurchmesser des Rohrs angepassten Werkzeug aus dem Rohr herausgezogen werden. Wird eine Versorgungsleitung beschädigt, so müssen ungünstigstenfalls beide Versorgungsleitungen umständlich und zeitraubend ausgebaut werden, um überhaupt erst feststellen zu können, welche der Versorgungsleitungen an welcher Stelle beschädigt ist. Anschließend muss der oben beschriebene aufwendige Einfädelprozess wiederholt werden. Diese Ausführung ist somit umständlich bei der Montage und schlecht zu kontrollieren.

Nachteilig bei bekannten Schneidwerken ist, dass die Versorgungsleitungen für die Messerantriebe der Schneidwerke in der Regel offen an den Schneidwerken und den Befestigungselementen der Erntemaschinen geführt werden. Oft sind nur schwache Befestigungen, z.B. Kunststoffschellen vorgesehen, welche durch Schneidgut oder unsachgemäße Handhabung leicht beschädigt werden. Dies hat zur Folge, dass die Versorgungsleitungen teilweise herunterhängen und die Gefahr besteht, dass sie abgerissen werden oder sogar in die Schneidmesser gelangen.

Der Erfindung liegt deshalb die Aufgabe zugrunde, ein Schneidwerk zu schaffen, welches die oben genannten Nachteile überwindet und einen möglichst lange beschädigungs- und wartungsfreien Einsatz des Schneidwerks ermöglicht.

Gelöst wird diese Aufgabe durch ein Schneidwerk mit den Merkmalen des Anspruchs 1. Vorteilhafte Ausgestaltungen und bevorzugte Weiterbildungen der Erfindung können den abhängigen Ansprüchen entnommen werden.

Das eingangs genannte Schneidwerk für eine Erntemaschine ist erfindungsgemäß dadurch gekennzeichnet, dass ein entlang des Messerrückens verlaufender Kabelkanal zur Aufnahme der Versorgungsleitungen vorgesehen ist, wobei der Kabelkanal ein längliches Hohlprofil mit einem C-förmigen oder U-förmigen Querschnitt aufweist.

In einer fertigungstechnisch vorteilhafte Ausführung des Schneidwerks können der Messerrücken und der Kabelkanal einteilig ausgebildet sein.

Bevorzugt kann der Kabelkanal aus einem länglichen, im wesentlichen parallel zum Messerrücken verlaufenden Hohlprofil bestehen. Das Hohlprofil kann hierbei vorteilhaft einen polygonalen, ovalen oder kreisringförmigen Querschnitt haben.

Das Hohlprofil ist zumindest bereichsweise längsseitig offen, so dass die Versorgungsleitungen leicht in den Kabelkanal eingelegt werden können. Auch ermöglicht dies eine einfache Überprüfung der Versorgungsleitungen auf Beschädigungen oder gegebenenfalls den schnellen Austausch defekter Versorgungsleitungen.

Das Befestigungselement kann sicherheitstechnisch vorteilhaft ein den Kabelkanal verlängerndes Tragrohr sein. Hierdurch können die Versorgungsleitungen am gesamten Schneidwerk bis hin zur Erntemaschine geschützt geführt werden. Alternativ kann das Befestigungselement auch vorteilhaft aus einer im Kabelkanal vorgesehenen Ausnehmung gebildet sein, durch welche die Versorgungsleitungen einfach durchgeführt werden können.

In einer weiteren vorteilhaften Ausführung kann der Kabelkanal als Schwingungsdämpfer zwischen Befestigungselement und Messerrücken ausgebildet sein. Hierdurch werden vor allem durch die Schneidmesser verursachte Schwingungen bedämpft und Beschädigungen und die frühzeitige Alterung von Bauteilen des Schneidwerks oder auch der Erntemaschine sicher verhindert.

Vorteilhaft können über die Länge des Messerrückens mehrere Messerhalter angebracht sein, wobei der Messerrücken einen stufenförmig abgewinkelten Bereich und die daran angebrachten Messerhalter am Messerrücken angeschlagene gegenläufig gestufte Klemmbleche aufweisen. In einer vorteilhaften Weiterbildung dieser Ausführung kann zur definierten Spannung der Schneidmesser gegeneinander jeweils eine durch eine Bohrung im Klemmblech und Messerrücken reichende Spannverschraubung vorgesehen sein. Weiter können am vorderen Ende der Klemmbleche jeweils eine Kunststoffführung als Gleitführung für eine Messerleiste des oberen Schneidmessers und/oder am Messerrücken Kunststoffführungen als Gleitführung für eine Messerleiste des unteren Schneidmessers angebracht sein.

Vorteilhaft kann ein oben beschriebenes Schneidwerk bei einer Erntemaschine, insbesondere einer Rapserntemaschine, verwendet werden, wobei die Versorgungsleitungen zur Verbindung des Messerantriebs mit Versorgungsanschlüssen der Erntemaschine in dem Kabelkanal geführt sind. Hierdurch lassen sich Beschädigungen der Verbindungsleitungen, seien es vorteilhaft Hydraulikleitungen zur Versorgung eines als Hydraulikmotor ausgebildeten Messerantriebs und/oder elektrische Leitungen zur Versorgung eines als Elektromotor ausgebildeten Messerantriebs, sicher vermeiden. Vorteilhaft können die Versorgungsleitungen auch elektrische Leitungen zur Ansteuerung des Messerantriebs umfassen.

Weitere Besonderheiten und Vorzüge der Erfindung ergeben sich aus der folgenden Beschreibung eines bevorzugten Ausführungsbeispiels anhand der begleitenden Zeichnungen. Diese zeigen;
- **Fig. 1**: eine schematische dreidimensionale Darstellung eines erfindungsgemäßen Schneidwerks;
- **Fig. 3**: eine schematische dreidimensionale Ansicht eines Antriebsbereichs des Schneidwerks aus Fig. 1.

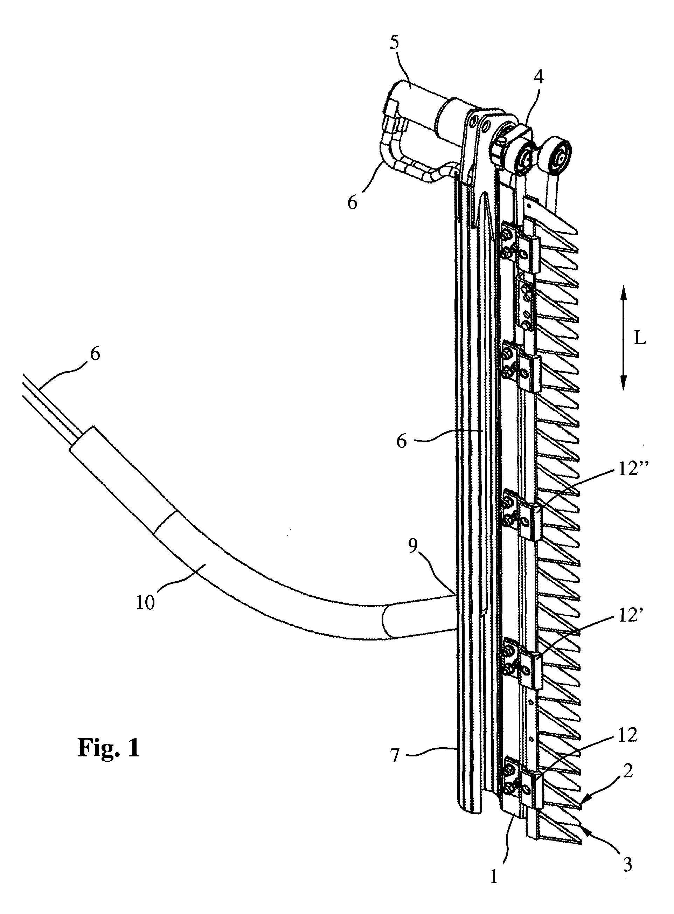

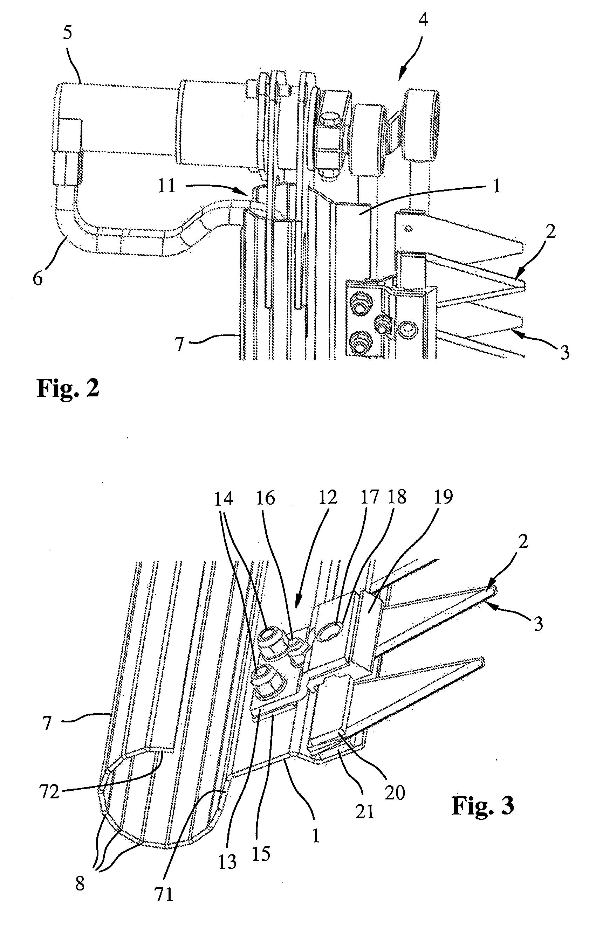

- **Fig. 3**: eine schematische dreidimensionale Ansicht eines freien Endes des Schneidwerks aus Fig. 1.

Ein in Fig. 1 gezeigtes erfindungsgemäßes Schneidwerk weist einen länglichen Messerrücken 1 auf, an dem ein oberes Schneidmesser 2 und ein unteres Schneidmesser 3 in einer Längsrichtung L des Messerrückens 1 beweglich antreibbar gelagert sind. Angetrieben werden die Schneidmesser 2, 3 in bekannter Weise über eine Hebelgetriebe 4 durch einen vorliegend als Hydraulikmotor 5 ausgebildeten Messerantrieb. Der Hydraulikmotor 5 wird über Versorgungsleitungen 6 von der nicht gezeigten Erntemaschine, z.B. ein Mähdrescher, mit unter Druck stehender Hydraulikflüssigkeit versorgt und angesteuert. Um den Weg der Versorgungsleitungen 6 im Schneidwerk besser nachvollziehen zu können, sind sie in Fig. 1 mehrfach mit der gleichen Bezugsziffer versehen.

Anstelle des Hydraulikmotors kann auch ein Elektromotor als Messerantrieb 4 und statt des Hebelgetriebes 4 auch ein anderes Übertragungselement, z.B. ein Exzentergetriebe bei einem Elektromotor, verwendet werden.

Wie in Fig. 3 besonders gut erkennbar, ist auf der den Schneidmessern 2, 3 abgewandten Längsseite des Messerrückens 1 ein als Hohlprofil ausgebildeter, im Querschnitt C-förmiger, polygonaler Kabelkanal 7 vorgesehen. Der Kabelkanal 7 verläuft hierbei im wesentlichen parallel zur Längsrichtung L des Messerrückens 1 und ist mit diesem einteilig aus einem vorzugsweise hochfesten Metallblech mit einem Gesamtquerschnitt ähnlich einem Fragezeichen hergestellt.

Bevorzugt ist der Kabelkanal 7 im sog. Pilgerschrittverfahren hergestellt. Durch exemplarisch bezeichnete Längskanten 8 des Kabelkanals 7 ist dieser vorteilhaft sehr verwindungssteif.

Wie in Fig. 1 dargestellt, ist der Kabelkanal 7 an einer Anschlussstelle 9 mit einem vorliegend als Tragrohr 10 ausgebildeten Befestigungselement verbunden. Das Tragrohr 10 wird dann in an sich bekannter Weise an der Erntemaschine befestigt. Anstelle des Tragrohrs 10 kann das Befestigungselement auch anders ausgebildet sein, beispielsweise als Flansch, Lochblech oder auch als Bohrung im Kabelkanal 7. Vorzugsweise ist die Stelle 9 entfernt vom Messerrücken 1 am Kabelkanal 7 angeordnet. Die Ausbildung als Tragrohr 10 weist den Vorteil auf, dass dieses als Verlängerung des Kabelkanals 7 am Messerrücken 1 verwendet werden kann.

Wie in Fig. 1 und 2 gut erkennbar, weist der Kabelkanal 7 an seinem in Fig. 1 und 2 oberen, antriebsseitigen Ende des Schneidwerks eine Ausnehmung 11 auf, durch die die Versorgungsleitungen 6 vom Hydromotor 5 kommend in den vom Kabelkanal 7 umgebenen Hohlraum geführt werden. Dort werden die Versorgungsleitungen 6 bis zur Anschlussstelle 9 geführt, von wo sie über eine Durchgangsöffnung im Kabelkanal 7 in das Tragrohr 10 gelangen. Weiter verlaufen die Versorgungsleitungen 6 geschützt im Tragrohr 10 zu nicht gezeigten Versorgungsanschlüssen der Erntemaschine. Hierdurch werden die Versorgungsleitungen 6 vor Beschädigung und Abriss, beispielsweise verursacht durch am Schneidwerk vorbeilaufendes Schnittgut, geschützt.

Der Kabelkanal 7, der einerseits mit einem ersten Schenkel 71 mit dem Messerrücken 1 verbunden ist und andererseits einen im Querschnitt freien Schenkel 72 aufweist, dämpft zudem als Schwingungsdämpfer die von den oszillierend aneinander vorbeigleitenden Schneidmesser 2 und 3 herrührenden Schwingungen stark ab. Hierdurch kann eine baldige Materialermüdung des Tragrohrs 10, der Anschlussstelle 9 oder auch anderer mit dem Schneidwerk verbundener Teile der Erntemaschine oder des Schneidwerks vermieden werden.

Der Kabelkanal 7 kann anstelle des polygonalen, C-förmigen Querschnitts auch andere Querschnitte aufweisen. Auch kann der Kabelkanal 7 einen U-förmigen, ovalen kreisringförmigen Querschnitt haben. Da das Hohlprofil auf seiner Längsseite zumindest zum Teil offen ist, also einen gegenüber dem Messerrücken 1 frei schwingfähigen Schenkel 72 aufweist, kann es die Schwingungen besonders gut dämpfen.

Um Schwingungen weiter dämpfen und den Verschleiß der Schneidmesser 2, 3 und der von diesen berührten weiteren Teile des Schneidwerks zu verringern, sind die Schneidmesser 2, 3 vorzugsweise auf die in Fig. 3 gezeigte Weise am Messerrücken 1 gelagert.

Über die Länge des Messerrückens 1 sind vorliegend mehrere Messerhalter 12, 12', 12" usw. angebracht, deren Ausbildung und Funktion anhand des Messerhalters 12 exemplarisch erläutert wird.

Der Messerhalter 12 weist ein gestuftes Klemmblech 13 auf, welches mittels zweier Klemmverschraubungen 14 am Messerrücken 1 angeschlagen ist. Zwischen Klemmblech 13 und Messerrücken 1 ist ein Kippblech 15 gelegt. Im Stufenbereich eines stufenförmig abgewinkelten Bereichs des Messerrückens 1 reicht eine Spannverschraubung 16 durch Bohrungen in Klemmblech 13 und Messerrücken 1. Mit der Spannverschraubung 16 kann vorteilhaft ein Führungsbereich des Klemmblechs 13 für das obere Schneidmesser 2 in Richtung eines korrespondieren ausgebildeten Führungsbereichs des Messerrückens 1 für das untere Schneidmesser 3 definiert gespannt werden kann. An diesem vorderen Ende des Klemmblechs 13 ist eine Durchgangsbohrung 17 vorgesehen, in die ein kreisringförmiger Ansatz 18 einer Kunststoffführung 19 eingesteckt ist. Die Kunststoffführung 19 dient vorteilhaft als Gleitführung für eine Messerleiste 20 des oberen Schneidmessers 2. Entsprechend sind in den Zeichnungen nicht erkennbare Kunststoffführungen zur Gleitführung einer Messerleiste 21 des unteren Schneidmessers 3 am Messerrücken 1 angebracht.

## Patentansprüche

1. Schneidwerk für eine Erntemaschine mit einem länglichen Messerrücken (1), mindestens einem in dessen Längsrichtung (L) beweglich daran angeordnetem Schneidmesser (2, 3), einem Messerantrieb (5) zum Antreiben des Schneidmessers (2, 3), einem Befestigungselement (10) zum Befestigen des Schneidwerks an der Erntemaschine, wobei Versorgungsleitungen (6) zur Verbindung des Messerantriebs (5) mit Versorgungsanschlüssen der Erntemaschine vorgesehen sind, und wobei ein entlang des Messerrückens (1) verlaufender Kabelkanal (7) zur Aufnahme der Versorgungsleitungen (6) vorgesehen ist, **dadurch gekennzeichnet, dass** der Kabelkanal (7) ein längliches Hohlprofil mit einem C-förmigen oder U-förmigen Querschnitt aufweist.

2. Schneidwerk nach Anspruch 1, **dadurch gekennzeichnet, dass** der Messerrücken (1) und der Kabelkanal (7) einteilig ausgebildet sind.

3. Schneidwerk nach Anspruch 2, **dadurch gekennzeichnet, dass** das Hohlprofil einen ovalen, kreisringförmigen oder polygonalen Querschnitt hat.

4. Schneidwerk nach Anspruch 2 oder 3, **dadurch gekennzeichnet, dass** das Hohlprofil zumindest bereichsweise längsseitig offen ist.

5. Schneidwerk nach Anspruch 4, **dadurch gekennzeichnet, dass** der gemeinsame Querschnitt von Messerrücken (1) und Kabelkanal (7) im wesentlichen die Form eines Fragezeichens hat.

6. Schneidwerk nach einem der voranstehenden Ansprüche, **dadurch gekennzeichnet, dass** das Befestigungselement ein den Kabelkanal (7) verlängerndes Tragrohr (10) ist.

7. Schneidwerk nach einem der voranstehenden Ansprüche, **dadurch gekennzeichnet, dass** der Kabelkanal (7) als Schwingungsdämpfer zwischen Befestigungselement (10) und Messerrücken (1) ausgebildet ist.

8. Schneidwerk nach einem der voranstehenden Ansprüche, **dadurch gekennzeichnet, dass** über die Länge des Messerrückens (1) mehrere Messerhalter (12, 12', 12") angebracht sind, wobei der Messerrücken (1) einen stufenförmig abgewinkelten Bereich und die daran angebrachten Messerhalter (12, 12', 12") am Messerrücken (1) angeschlagene gegenläufig gestufte Klemmbleche (13) aufweisen.

9. Schneidwerk nach Anspruch 8, **dadurch gekennzeichnet, dass** zur definierten Spannung der Schneidmesser (2, 3) gegeneinander jeweils eine durch eine Bohrung im Klemmblech (13) und Messerrücken (1) reichende Spannverschraubung (16) vorgesehen ist.

10. Schneidwerk nach Anspruch 8 oder 9, **dadurch gekennzeichnet, dass** am vorderen Ende der Klemmbleche (13) jeweils eine Kunststoffführung (19) als Gleitführung für eine Messerleiste (20) des oberen Schneidmessers (2) und/oder am Messerrücken (1) Kunststoffführungen als Gleitführung für eine Messerleiste (21) des unteren Schneidmessers (3) angebracht sind.

11. Verwendung eines Schneidwerks nach einem der voranstehenden Ansprüche bei einer Erntemaschine, wobei Versorgungsleitungen (6) zur Verbindung des Messerantriebs (5) mit Versorgungsanschlüssen der Erntemaschine in dem Kabelkanal (7) geführt sind.

## Claims

1. Cutting mechanism for a harvesting machine with an elongated cutter supporting rail (1), at least one cutter blade (2; 3) arranged thereon and moveable in the longitudinal direction (L) thereof, a cutter blade drive (5) for driving the cutter blade (2, 3), a fastening element (10) for fastening the cutting mechanism to the harvesting machine, wherein supply lines (6) are provided to connect the cutter blade drive (5) with supply connections of the harvesting machine, and wherein a cable channel (7) running along the cutter supporting rail (1) is provided to accommodate the supply lines (6), **characterised in that** the cable channel (7) exhibits an elongated hollow profile with a C-shaped or U-shaped cross-section.

2. Cutting mechanism according to claim 1, **characterised in that** the cutter supporting rail (1) and the cable channel (7) are formed in one piece.

3. Cutting mechanism according to claim 2, **characterised in that** the hollow profile has an oval, circular or polygonal cross-section.

4. Cutting mechanism according to claim 2 or 3, **characterised in that** the hollow profile is open on the long side at least in regions.

5. Cutting mechanism according to claim 4, **characterised in that** the joint cross-section of the cutter supporting rail (1) and the cable channel (7) is essentially the shape of a question mark.

6. Cutting mechanism according to one of the preceding claims, **characterised in that** the fastening element is a carrier tube (10) which extends the cable channel (7).

7. Cutting mechanism according to one of the preceding claims, **characterised in that** the cable channel (7) is embodied as a vibration damper between the fastening element (10) and the cutter supporting rail (1).

8. Cutting mechanism according to one of the preceding claims, **characterised in that** a plurality of cutter holders (12, 12', 12") are attached over the length of the cutter supporting rail (1), the cutter supporting rail (1) exhibiting a step-shaped angled region and the cutter holders (12, 12', 12") attached thereto exhibiting stepped clamping plates (13) running in the opposite direction attached to the cutter supporting rail (1).

9. Cutting mechanism according to claim 8, **characterised in that** in each case a clamping bolt (16) is provided extending through a bore in the clamping plate (13) and the cutter supporting rail (1) to ensure the defined tension between the cutter blades (2, 3).

10. Cutting mechanism according to claim 8 or 9, **characterised in that** in each case a plastic guide (19) is attached at the front end of the clamping plates (13) to provide sliding guidance for a cutter bar (20) of the upper cutter blade (2) and/or plastic guides are attached to the cutter supporting rail (1) to provide sliding guidance for a cutter bar (21) of the lower cutter blade (3) .

11. Use of a cutting mechanism according to one of the preceding claims in a harvesting machine, wherein supply lines (6) for connecting the cutter blade drive (5) to supply connections of the harvesting machine are run in the cable channel (7).

## Revendications

1. Barre de coupe pour une moissonneuse comprenant une tringle de lame (1) oblongue, au moins une lame de coupe (2 ; 3) disposée dessus de manière mobile dans son sens longitudinal (L), un entraînement de lame (5) pour l'entraînement de la lame de coupe (2 ; 3), un élément de fixation (10) pour la fixation de la barre de coupe sur la moissonneuse, des câbles d'alimentation (6) étant prévus pour la liaison de l'entraînement de lame (5) avec des raccords d'alimentation de la moissonneuse, et un canal câblé (7) s'étendant le long de la tringle de lame (1) étant prévu pour la réception des câbles d'alimentation (6), **caractérisée en ce que** le canal câblé (7) présente un profilé creux oblong avec une section transversale en C ou en U.

2. Barre de coupe selon la revendication 1, **caractérisée en ce que** la tringle de lame (1) et le canal câblé (7) sont réalisés d'un seul tenant.

3. Barre de coupe selon la revendication 2, **caractérisée en ce que** le profilé creux possède une section transversale polygonale, ovale ou annulaire et circulaire.

4. Barre de coupe selon la revendication 2 ou 3, **caractérisée en ce que** le profilé creux est ouvert au moins par endroits sur le côté longitudinal.

5. Barre de coupe selon la revendication 4, **caractérisée en ce que** la section transversale commune de la tringle de lame (1) et du canal câblé (7) présente sensiblement la forme d'un point d'interrogation.

6. Barre de coupe selon l'une quelconque des revendications précédentes, **caractérisée en ce que** l'élément de fixation est un tube porteur (10) prolongeant le canal câblé (7).

7. Barre de coupe selon l'une quelconque des revendications précédentes, **caractérisée en ce que** le canal câblé (7) est réalisé comme un amortisseur d'oscillations entre l'élément de fixation (10) et la tringle de lame (1).

8. Barre de coupe selon l'une quelconque des revendications précédentes, **caractérisée en ce que** plusieurs supports de lame (12, 12', 12") sont montés sur la longueur de la tringle de lame (1), la tringle de lame (1) présentant une zone coudée de manière étagée, et les supports de lame montés dessus (12, 12', 12") présentant des tôles de serrage (13) étagées en sens contraire butant contre la tringle de lame (1).

9. Barre de coupe selon la revendication 8, **caractérisée en ce que**, respectivement, un vissage de serrage (16) parvenant par un perçage dans la tôle de serrage (13) et la tringle de lame (1), est prévu pour le serrage défini des lames de coupe (2, 3) l'une contre l'autre.

10. Barre de coupe selon la revendication 8 ou 9, **caractérisée en ce que**, respectivement, un guidage plastique (19) est monté sur l'extrémité avant des tôles de serrage (13) en guise de guidage coulissant pour une barre à lame (20) de la lame de coupe supérieure (2) et/ou des guidages plastiques sont montés sur la tringle de lame (1) en guise de guidage coulissant pour une barre à lame (21) de la lame de coupe (3) inférieure.

11. Utilisation d'une barre de coupe selon l'une quelconque des revendications précédentes pour une moissonneuse, des câbles d'alimentation (6) pour la liaison de l'entraînement de lame (5) avec des raccords d'alimentation de la moissonneuse, étant guidés dans le canal câblé (7).
